Europäisches Patentamt

European Patent Office

Office européen des brevets

(11) Publication number: **0 382 351**
**A2**

# EUROPEAN PATENT APPLICATION

(21) Application number: **90300523.9**

(51) Int. Cl.⁵: **G06F 3/023, G06K 11/08**

(22) Date of filing: **18.01.90**

(30) Priority: **10.02.89 US 309834**

(43) Date of publication of application:
**16.08.90 Bulletin 90/33**

(84) Designated Contracting States:
**DE FR GB**

(71) Applicant: **Hewlett-Packard Company**
**3000 Hanover Street**
**Palo Alto California 94304(US)**

(72) Inventor: **Ramachandran, Hariram**
**12 Jalan Tempua**
**Singapore 1129(SG)**

(74) Representative: **Colgan, Stephen James et al**
**CARPMAELS & RANSFORD 43 Bloomsbury**
**Square**
**London WC1A 2RA(GB)**

(54) **Cursor control mechanism.**

(57) A hand-controlled mechanism is described for producing signals to move the position of a cursor in a computer display. The mechanism includes a shaft (12) on which a cylindrical member (10) is mounted, the member being both rotatable with the shaft and slidable along its axis. The cylindrical member is provided with at least two sets of encoding markings (16,18), such markings being orthogonally related to each other. The first set of reflective markings (16) reflect radiant energy of all but a first band of wavelengths while the second set of encoding markings (18) is reflective of radiant energy of all but a second band of wavelengths. Optical emitters/sensors (22,24,20,34) are provided which are responsive to the movement of the encoding markings (16,18) to sense both rotational and axial movement of the cylindrical member (10) and to provide outputs indicative thereof. The optical emitter/sensor (20,34) which sense rotational motion are responsive to reflected radiant energy of the first band of wavelengths and the optical emitter/sensor (22,24) which sense axial movement are responsive to reflected energy of the second band of wavelengths.

FIG. 1a

Xerox Copy Centre

## CURSOR CONTROL MECHANISM

### FIELD OF THE INVENTION

This invention relates to apparatus for controlling an alpha-numeric display device and, more particularly, an apparatus for controlling the position of an indicator on the screen of a display device.

### BACKGROUND OF THE INVENTION

The mouse is a commonly used input device for computer display terminals, and provides signals to control the position of a cursor on the display face. The mouse is configured as a small, box-like device and is placed on and moved over a flat surface in various directions.

As position changing signals are generated by the mouse, they are transmitted to the terminal which causes a corresponding movement of the cursor.

The most commonly used mouse relies upon the physical movement of rollers beneath the mouse to provide cursor control signals. There is also a class of mouse structures which rely upon optical inputs to control the cursor position. In U.S. Patent 4,409,479, Sprague et al describe an optical mouse which moves over a grid of horizontal and vertical lines of one color with spaces between the grid lines being another color. The mouse generates signals indicative of the amount and direction of its movement which are then used to control the position of the cursor.

In U.S. Patent 4,546,347, Kirsch describes an optical mouse which is provided with two linear arrays of detector cells at right angles to each other. The mouse moves over a surface marked with a grid of lines with three optical contrast levels, including a separate contrast level for line intersections. One linear array images a line and a space in the horizontal direction while the other array images a line and space in the vertical direction, both being used to provide cursor control signals.

In U.S. Patent 4,364,035, Kirsch further describes an optical mouse which moves over a surface marked with a two-color grid of lines. The mouse has dual color light sources which rapidly and continuously switch from one color to the other. As the mouse crosses lines of different color, its detectors sense changes in contrast and generate electrical signals representing the line crossings. These signals are employed to control the position of a cursor.

In U.S. Patent 4,751,380, to Victor et al., an optical mouse having a three by three detector array moves over a surface having a grid pattern of intersecting orthogonal lines of a first color and spaces defined between the grid lines of a second contrasting color. Through an analysis of outputs from the mouse, signals are derived to control the position of a cursor.

While the mouse is useful for many applications, it requires that one hand be withdrawn from the terminal's keyboard to control its movement. Recently, a new mechanism has been developed which provides directional control signals for a cursor, but allows both of the users hands to remain in contact with the keyboard. In U.S. Patent 4,712,101 to C. F. Culver, this mechanism is shown as comprising a rotatable shaft on which a cylinder has been mounted. The mechanism is constructed as part of or adjacent to a keyboard and is positioned on the user side of the shift bar. In one configuration, it comprises a separate entity which sits immediately in front of the keyboard.

Rotation of the cylinder rotates the shaft; however, the cylinder is also able, simultaneously, to translate longitudinally along the axis of the shaft. One encoder is coupled to the shaft and provides rotary shaft movement signals which control one direction of movement of the cursor. Another encoder is coupled to the cylinder and provides a signal indicative of its longitudinal movement. That signal is employed to control the cursor's movement in a second direction on the display. As a result of this structure, a cursor's position in the display is controllable by the action of one hand both rotating and translating the cylinder while it remains in contact with the keyboard.

Culver employs a variety of encoders to derive his motion signals. In one version, he employs a code wheel rotatable with the shaft and a second encoder wheel which is operated by a cable connected to the cylinder. In another version, the rotary wheel is coupled to the shaft by a gear arrangement while longitudinal movement is sensed by a linear encoder directly coupled to the cylinder. In still another version, Culver suggests the use of a linear resistive strip for longitudinal position sensing.

In U.S. Patent 4,724,715 Culver further describes a number of design modifications to the structures shown in his '101 patent. Those modifications revolve about the use of analogue elements as position sensors rather than the digital encoders shown in his earlier patent.

Despite the acknowledged benefits of Culver's input mechanism, his implementations are expensive and some are difficult to maintain in adjustment when operated by the user.

Accordingly, it is an object of this invention to provide an improved cursor input mechanism.

It is another object of this invention to provide a cursor input mechanism which includes a less expensive and more maintainable movement sensor system.

It is still another object of this invention to provide a cursor control mechanism which employs optical sensing for control purposes.

## SUMMARY OF THE INVENTION

A hand-controlled mechanism is described for producing signals to move the position of a cursor in a computer display. The mechanism includes a shaft on which a cylindrical member is mounted, the member being both rotatable with the shaft and slidable along its axis. The cylindrical member is provided with at least two sets of encoding markings, such markings being orthogonally related to each other. The first set of reflective markings reflect radiant energy of all but a first band of wavelengths while the second set of encoding markings is reflective of radiant energy of all but a second band of wavelengths. Optical means are provided which are responsive to the movement of the encoding markings to sense both rotational and axial movement of the cylindrical member and to provide outputs indicative thereof. The optical means which sense rotational motion are responsive to reflected radiant energy of the first band of wavelengths and the optical means which sense axial movement are responsive to reflected energy of the second band of wavelengths.

## DESCRIPTION OF THE THE DRAWINGS

Fig. 1 is a partial perspective view of the invention.

Fig. 1a is a partial perspective view of the invention when incorporated into a keyboard.

Fig. 2 is a perspective view of the cylindrical member used with the invention along with an expanded area of the optical markings used to sense both rotational and longitudinal movement.

Fig. 3 is a schematic/isometric view of the cylindrical member showing its relationship to the optical sensing circuits.

Fig. 4 is a high level block diagram of the circuit utilized in the operation of the invention.

## DETAILED DESCRIPTION OF THE INVENTION

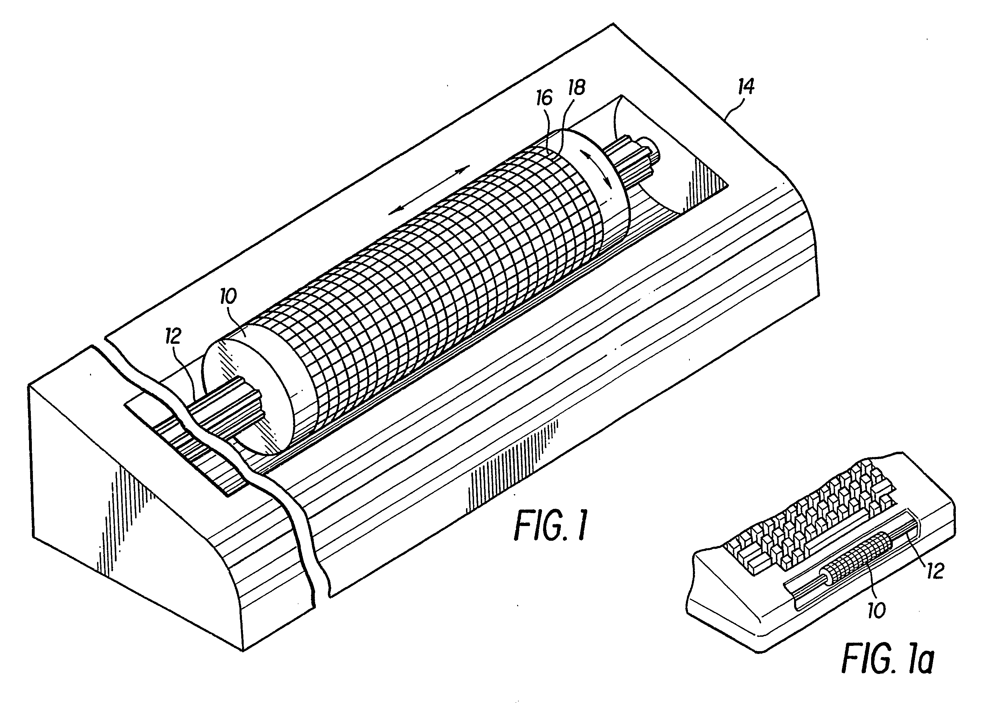

Referring to Fig. 1, the cursor control mechanism comprises a cylindrical member 10 which is mounted on a spline shaft 12. Shaft 12 is mounted for rotary motion within housing 14. The splines on shaft 12 interact with grooves (not shown) within cylindrical member 10 and provide for the rotation thereof, while also providing member 10 with the ability to move longitudinally along the elongated axis of shaft 12. A plurality of optically reflective markings 16 and 18 are provided on the surface of cylindrical member 10 and enable encoding circuitry to detect both rotary and longitudinal movement thereof. Markings 16 are of one color, are oriented parallel to the center line of shaft 12 and provide an indication of the rotary motion of cylindrical member 10. Circular markings 18 are of a different color, are oriented orthogonally (in concentric circles) to the aforementioned longitudinal axis. Markings 18 provide an indication of the translational movement of member 10 along shaft 12.

As shown in Fig. 1a, the cursor control mechanism may be mounted in the frontal portion of a keyboard, preferably on the user's side of the shift bar. In such case, the mechanism is located adjacent to the front face of the keyboard where it can be operated by the fingers, thumb or palm of a user's hand. When so operated, the cursor control mechanism permits the fingers of both hands to be substantially free to manipulate the keyboard keys.

Cylindrical member 10 may also be configured as a separate entity (e.g., as in Fig. 1) which sits immediately in front of the keyboard's structure. Under these conditions, the mechanism abuts the front of the keyboard and has an upper surface whose slope approximately matches that of the keyboard to be ergonomically pleasing.

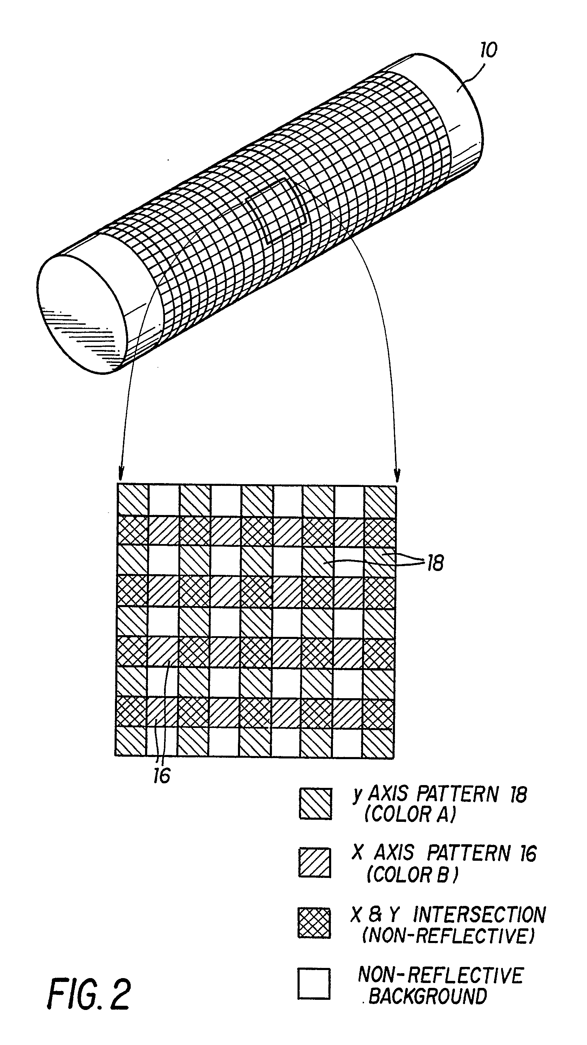

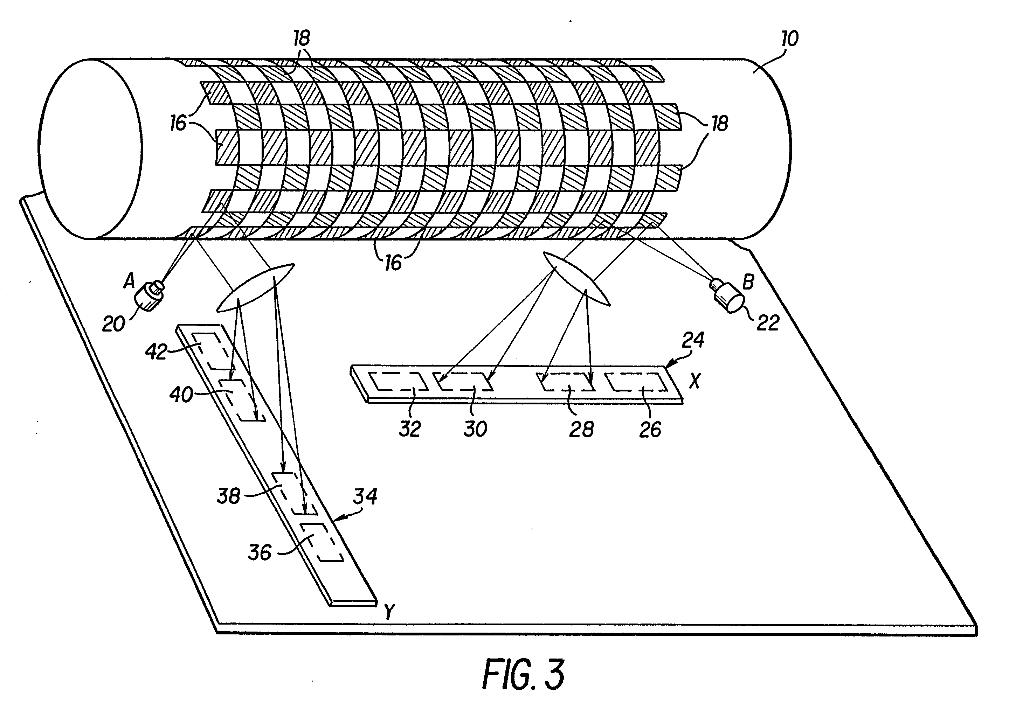

The details of the optical markings are shown in Fig. 2 and the optical sensing arrangement is shown in Fig. 3. Referring first to Fig. 2, encoding stripes oriented orthogonal to the axis of shaft 12 will be hereinafter referred to as the y axis pattern encoding striped whereas the stripes which are parallel to the axis of shaft 12 will be referred to as the x axis pattern encoding stripes. As aforestated, the y axis pattern encoding stripes 18 are of color a (i.e., a first band of wavelengths) and comprise a set of circles equidistantly placed along the surface of cylindrical member 10. X axis pattern encoding stripes 16 are a set of longitudinal lines placed about the periphery of cylindrical member 10 and are comprised of a different color (color b a second band of wavelengths). The background and the intersections between the x and y axis patterns, are substantially non-reflective to the lights used to detect the passage of encoding lines 16 and 18.

A light source suitable for "interrogating" y axis pattern 18 (color a) preferably has as its major color, color b. In a similar manner, the light source for interrogating x axis pattern 16 (color b) is comprised mainly of color a. In this manner, when color a light is used to interrogate the x axis pattern, it is not reflected by the color a y axis pattern 16. In a similar fashion, when color b light is used to interrogate y axis pattern 18, the x axis pattern (color b) does not substantially reflect it.

Turning now to Fig. 3, the x and y axis patterns 16 and 18 are cross hatched on cylindrical member 10 but not the nonreflective crossovers or background area. Remembering that x axis pattern 16 is comprised of color b, the interrogating light source 20 has, as its major component, color a. In a similar fashion, the interrogating light source 22 for y axis color "a" pattern 18, has as its major color component color b. While any number of colors are usable in this invention, color a may be provided from an orange light emitting diode whereas color b may be green as provided from a green emitting diode.

The beams emanating from light sources 20 and 22 are directed through an imaging lenses and then onto of x and y light sensors. X axis light sensor 24 includes four individual light responsive sensing devices 26, 28, 30 and 32. y axis sensor array 34 comprises four light sensors 36, 38, 40 and 42. In essence, as cylindrical member 10 rotates, image of each encoding stripe is caused to "walk" across a series of light sensors, such movement enabling the movement of member 10 to be determined.

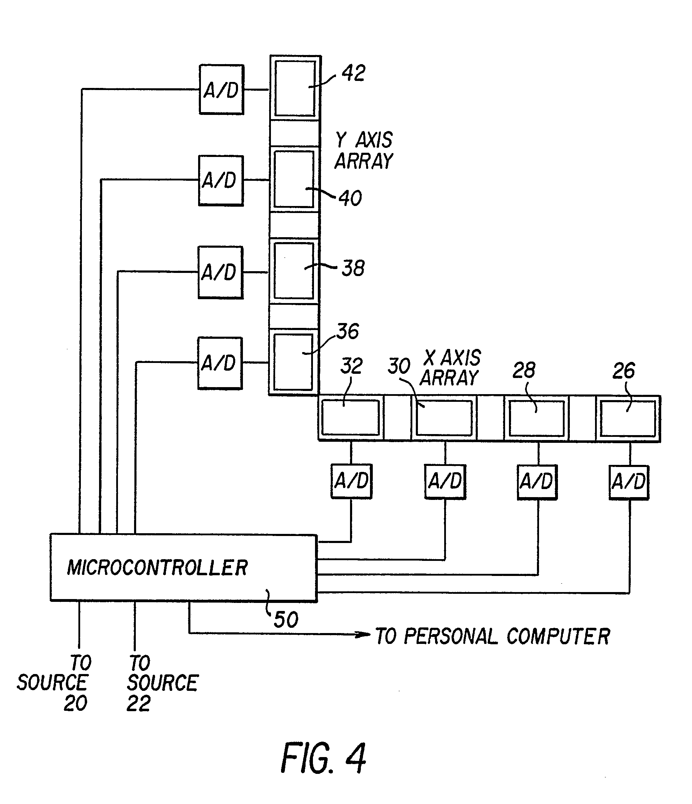

The operation of the sensing circuit will be understood by referring to Fig. 4 where a high level schematic of the circuit is shown. Each of the light sensing devices has an associated analogue to digital converter whose output feeds into mircocontroller 50. In turn, microcontroller 50 controls light sources 20 and 22 as well as providing signal outputs on line 52 which are fed into the mouse input of a personal computer.

The operation of the sensing circuitry will now be described but will only deal with one axis of movement. It being understood, that the same technique applies for the other axis of motion.

Initially, microcontroller 50 turns on light source 20 and a "snapshot" is taken of the states of y axis cells 36, 38, 40 and 42 (i.e. their output current values are sensed, digitized and stored). If it is assumed that the image of the y markings on member 10 falls on cells 38 and 40, the state of light sensing array 34 can be digitially represented as 0110. This state is stored as the "previous state" and the light source 20 is deactivated. After a small sampling delay, light source 20 is once again activated and a snapshot is again taken of the states of the y cells 34. Assuming the image has moved so that it falls on cells 38, 40 and 42 (partially), the state of the array is now 0111. This number is stored as the current state in microcontroller 50 and light source 20 is deactivated.

Within microcontroller 50, a comparison is now made of the previous and current states. If there is a change in state, then motion has occurred. The effect of the motion is either a shift of cell illumination in one direction or the other along sensor array 34. In the example given, there has been such a shift in array 34 from the previous state to the current state (i.e., from 0110 to 0111) - In other words, a one bit has been added by the leftmost sensor 42. This shift is detected within microcontroller 50 and a motion register within is either incremented or decremented depending upon the direction of movement. Subsequently, the current state becomess the "previous state" and the process commences again to take its next snapshot and repeat the above process. The identical process is carried out for movement along the x axis array, thus allowing microcontroller 50 to generate control signals which enable the cursor in an attached personal computer to be moved appropriately.

· It is to be understood that the above described embodiments of the invention are illustrative only and that modifications throughout may occur to those skilled in the art. Accordingly, this invention is not to be regarded as limited to the embodiments disclosed herein, but is to be limited as defined by the appended claims.

## Claims

1. A hand-controlled mechanism for producing signals to move the position of a cursor in a computer display, the mechanism comprising:
a shaft (12) having an elongated axis;
a cylindrical member (10) mounted coaxially around a portion of said shaft, said member being both rotatable about and slidable along said elongated axis, said cylindrical member (10) having at least first and second sets of reflective encoding markings (16,18) on its surface, said first set (16) not being reflective of radiant energy of a first band of wavelengths and said second set (18) not being reflective of radiant energy of a second band of wavelengths;
optical means (22,24,20,34) responsive to the movement of each set of encoding markings, to sense both rotational and axial movement of said cylindrical member (10) and to provide outputs indicative thereof, said rotational sensing optical means (20,34) responsive to reflected radiant energy of said first band of wavelengths and said axial movement sensing optical means (22,24) responsive to reflected energy of said second band of wavelengths.

2. A mechanism according to claim 1, wherein said optical means comprises:

radiant energy emitting/sensing means (22,24,20,34) associated with each said set of encoding markings (16,18), said emitting/sensing means associated (20,34) with said first set of encoding markings (16) for generating and responding to radiant energy of said second band of wavelengths, said radiant energy emitting/sensing means (22,24) associated with said second set of encoding markings (18) for generating and responding to radiant energy of said first band of wavelengths.

3. A mechanism according to claim 2, wherein said first set of encoding markings (16) comprise a plurality of markings oriented parallel to said elongated axis.

4. A mechanism according to claim 3, wherein said second set of encoding markings (18) comprises a set of markings oriented transversely to said elongated axis.

5. A mechanism according to claim 4, wherein said set of transverse encoding markings (16) is emplaced above the periphery of said cylindrical member as adjacent circles.

6. A mechanism according to claim 5, wherein said encoding markings (16,18) extend over a substantial portion of the length of said cylindrical member.

7. A mechanism according to claim 1 wherein said first band of wavelengths is color a and said second band of wavelengths is color b, said optical means comprising

a light source (22) of color a for interrogating said second set of reflective encoding markings (18);

a light source (20) of color b for interrogating said first set of reflective encoding markings (16);

an array of color a sensors (26,28,30,32) oriented to detect reflection of said color a light from said second reflective encoding markings;

an array of color b sensors (36,38,40,42) oriented to detect reflections of said color b light from said first reflective encoding markings; and

controller means (50) responsive to successive outputs from said color a and color b sensor arrays to provide control signals for a display cursor.

8. A mechanism according to claim 1 wherein each said array comprises a linear series of light sensors (24,34), said controller means (50) sampling the outputs from said series of light sensors at successive times to determine the changes in illumination thereof.

FIG. 1

FIG. 1a

EP 0 382 351 A2

y AXIS PATTERN 18
(COLOR A)

X AXIS PATTERN 16
(COLOR B)

X & Y INTERSECTION
(NON-REFLECTIVE)

NON-REFLECTIVE
BACKGROUND

FIG. 2

FIG. 3

EP 0 382 351 A2

FIG. 4